Europäisches Patentamt

European Patent Office

Office européen des brevets

(11) Publication number: **0 191 559**
A1

(12) ## EUROPEAN PATENT APPLICATION

(21) Application number: **86300399.2**

(22) Date of filing: **21.01.86**

(51) Int. Cl.⁴: **G 03 B 21/32**, G 03 B 21/50

(30) Priority: **28.01.85 US 695555**

(43) Date of publication of application: **20.08.86**
**Bulletin 86/34**

(84) Designated Contracting States: **BE CH DE FR IT LI LU NL SE**

(71) Applicant: **Mosely, John, 2534 Hutton Drive, Beverley Hills California 90210 (US)**

(72) Inventor: **Mosely, John, 2534 Hutton Drive, Beverley Hills California 90210 (US)**

(74) Representative: **Spence, Anne et al, Barlin Professional Services Barlin House 20 High Street, Carshalton, Surrey SM5 3AG (GB)**

(54) **A system for exhibiting motion pictures.**

(57) System for processing and exhibiting motion picture films in a manner that permits an entire theatrical feature to be placed on a single reel of film. The film-print contains two separate images displaced laterally, together with their respective soundtracks (4), so that one picture image will be properly projected with the projection apparatus moving in the forward direction (1), while the other picture image will be properly projected with the projection apparatus moving in the reverse direction (2). The entire program will be immediately ready for replay the instant that the previous program has finished its run, since the last frame (8) of the program will be adjacent to or in the close vicinity of the first frame (5) of the program, albeit in the reverse direction, giving the same effect as an endless loop. Also covered is the apparatus for running the special films in the preferred method.

ACTORUM AG

-1-

## A SYSTEM FOR EXHIBITING MOTION PICTURES

This invention relates to the manufacture and use of composite motion picture films normally containing picture and sound and the projection apparatus for projecting such films.

It is common practice in the processing laboratories to print 35 mm, 16 mm and 8 mm films in the 35 mm width, with the appropriate perforations. This has the obvious advantage that all formats can be run through the same processing machines and then split into the correct widths for projection prior to delivery.

In its broadest aspect the present invention provides a motion picture film that is configured so as to accommodate a plurality of images in the lateral plane which when viewed with the intended up or down motion of the film will always be correctly displayed top to bottom and left to right and with the correct and intended motion of the moving pictures. The invention further provides a motion picture projection apparatus suitable for use with or in combination with film according to the invention characterized by means for reversing its motion instantaneously and means for moving the film laterally in such a manner that the audience will not be aware that there has been any interruption to the continuity of the film.

In a preferred form the system proposed in this invention calls for the films to be printed half as is now done, i.e. with the first half of the picture starting at the top reel of the projector, image down, running onto the bottom reel, showing the picture in the correct configuration and with the correct motion. When the film reaches the last frame of the first half, the mechanism of the projector will reverse itself, at the same time moving the film across the projection aperture, which is fixed on the optical centerline of the projector. In this mode, the supply reel will be on the bottom and the take up reel on the top. Thus, the film will run back, ending its run so that it is immediately ready to start again, without having to remove the reel from the projector to rewind it. This system not only saves handling, since the whole system can be automated, but also will give the film its longest possible life as it will only be run at projection speed and will never be fast wound. (Fast winding tends to damage film.) The Exhibition System covered by this invention has, inter alia, all of the advantages of an endless loop system, without the complications, expense and drawbacks thereof.

The second part of the film (hereinafter referred to as the non-standard section) calls for different handling in the laboratory in the preparation of the composite printing negative which can then be handled conventionally in accordance with current practice. It will be appreciated that in order for the film to be correctly oriented on the screen, the picture must be printed in the same configuration as the first half, i.e., image down. However, in order to view this format properly, it is necessary for the projector to be running in the reverse direction to the one considered standard. Therefore, it is necessary to make the print with its action reversed. This requires the use of an optical effects or specially adapted printer, which will expose the printing negative image down; so that the first frame of this section will be horizontally next to the last frame of the previous section. It follows that the last frame of the non-standard section will be horizontally adjacent to or nearby, the first frame of the standard section. (In the preparation of these printing negatives, the editor will attempt to cut the picture into equal sections, but it will be appreciated that this will not be possible always and some offset can be anticipated.)

Further and in the alternative, the same principle of this invention can be applied to different widths of picture and different gauges of film. For example, four widths of 8 mm pictures can be placed on 35 mm film, two widths of 35 mm or four widths of 16 mm onto 70 mm film, etcetera. Although it might be expedient, as discussed later, to print some material in one direction only, it is a desired feature of this invention to split the program material into approximately equal halves or multiples of two, so that the last frame of picture will always be adjacent to or in the close proximity of the first frame of the picture.

It is a further feature of this invention that for certain requirements of film exhibition such as trailers and advertising material that require frequent changes during the run of the main film, the film may be printed on one strand only in either the standard or non-standard side to suit the particular requirement. One would expect the standard side to be used for material that will be projected before the main picture and the non-standard side to be used for material to be projected immediately following the main film. It is obvious that some time needs to elapse between shows to enable the audience that has just seen the picture to leave the theater and the new audience to take their seats. During this break, the projection equipment will automatically scan through the blank side, reading and acting upon any control data that may be present and to position itself to start the next show either manually or as commanded by an automation system.

Although there are many different designs for Motion Picture Projectors, all of which are well known to people skilled in the art, there are nevertheless some fundamental and important features of this invention which relate to the added special devices that must be incorporated into standard projection equipment in order to make the maximum use of this invention. It will be appreciated that it is necessary to reverse the direction of the projector instantaneously. Simultaneously, the film plane has to be shifted laterally so as to project the opposing image. This requires attention to four areas of the equipment. (Motion Picture Projectors have

-4-

two entirely different drive systems. The one that shows the picture is intermittent, so that the picture is moved rapidly between exposures to the projection light source, remaining stationary at the instant of exposure. The other one that reads the sound tracks is required to run continuously with the absolute minimum of variation. This is normally accomplished by the use of a carefully balanced flywheel attached to the sound drum.)

The four areas requiring special treatment are: 1) The upper and lower reel winding devices. 2) The main drive motor system. 3) The sound drum. 4) The gate mechanism and the intermittent motion.

Ideally, the film needs to be wound with sufficient tension so as to keep it evenly and tightly wound on the top and bottom reels without placing a strain on the drive mechanism, or in the extreme deforming the film. This can be accomplished most efficiently by use of a closed loop servo mechanism controlled by a microprocessor. In the alternative, torque motors or mechanical slipping clutches can also be used.

Having regard to the rapid acceleration and deceleration that is required in order to effect an imperceptible changeover between forward and reverse motions of the film in the auditorium, one can use a conventional reversible motor which will have to be significantly overrated in order to withstand rapid change of state. However, in the preferred embodiment of this invention (which may be claimed independently) a servo motor controlled by a microprocessor coupled to a bi-directional driven flywheel assembly is used. Two opposed flywheels on a common axis are driven as needed to the required speed for normal operation. By attaching a bi-directional, self-centering electrically controlled clutch mechanism, the flywheels can be connected as required for optimum performance. These devices when disconnected reduce the mass, placing less strain on the film and the mechanism, and facilitate rapid reversal of the motion. The same type of driven flywheels and clutches are used for the sound drum to effect instant reversal and a constant drive speed.

An important preferred feature of this invention (which may be claimed independently) which ensures successful operation of the bi-directional projector is the movable gate assembly. This assembly has to be movable laterally, so as to place the required section of film in the center of the optical plane, whereas the lens, aperture plate and light source remain fixed. The intermittent mechanism has to perform bidirectionally, while supporting the film adequately to ensure a steady picture on the screen and to avoid jump and weave. Additionally, a variable and remotely controllable aperture plate needs to be included just in front of the film towards the lens, so as to show the film with the correct aspect ratio. In the preferred configuration, a selection of the appropriate lens and lens setting will also be coupled to this device. These devices will normally be set automatically by data on the head leader of each film. If additional mass is required to drive the intermittent mechanism, the previously described bi-directional flywheels and clutches can be added.

Although the intermittent mechanism can be a standard device such as a well known "Geneva Movement", it is necessary to use a keyed or splined drive shaft of sufficient length, so as to permit the movement required of the intermittent sprocket for the correct placement of the film in the aperture. Since bi-directional intermittent motion is required, the preferred device shall employ either two coupled and synchronized sprockets, one at either end of the gate, or an endless toothed belt. In either case, it is preferred that some pressure shall be exerted on the film so as to give better guidance through the gate. The preferred embodiment of the gate mechanism of this invention shall be centered in the latent condition and moved in and out by electrically operated clutches to position the image in the center of the optical plane. Command for this action in the preferred embodiment of this invention will be controlled by the microprocessor that will also control all of the other necessary functions of the projector. In order to complete the system, an electrically coupled dowser needs to be placed behind the gate assembly and in front of the light source so as to shut it off mechanically during changeover of motion and in between performances. It is also desirable to provide safety sensors to shut down the light immediately in the event of a malfunction of the equipment. (Since high intensity light sources such as xenon bulbs require several minutes to reach their normal operating parameters, it is normal to leave them running for the entire time that the theater is open).

An embodiment of film and apparatus for projecting, in accordance with the invention will now be described, by way of example only, with reference to the accompanying drawings of which:

Fig. 1 shows a plan view of a film,

Fig. 2 shows schematically the reversible drive mechanism, and

Fig. 3 shows the movable gate assembly.

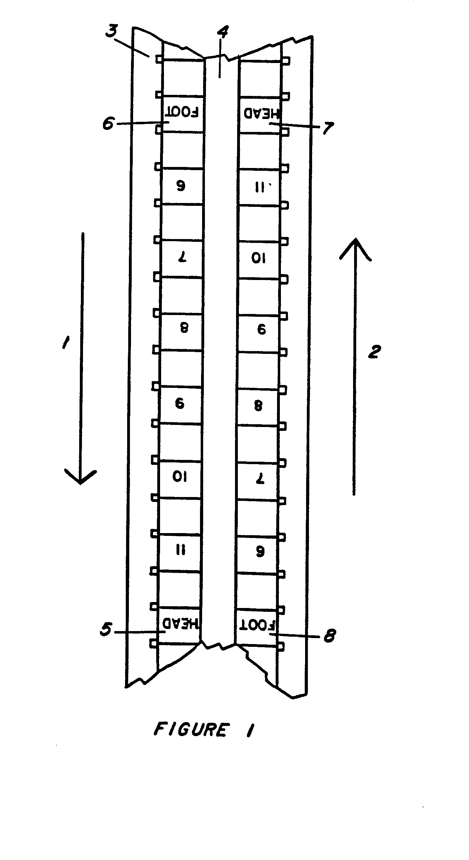

An example of a film to be used in this system is shown in Figure 1. In this example 35/32 mm film manufactured in accordance with American National Standard PH22.73 corresponding with ISO 3022 is used. The figure shows the film as viewed looking back from the front of the projector through the lens. 1 shows the direction of travel of the standard section. 2 shows the direction of travel of the non-standard section. 3 shows the perforations in the film. 4 shows the area presently assigned to the sound tracks. 5 & 6 show the first and last frames of picture in the standard section. 7 & 8 show the first and last frames of picture in the non-standard section. In addition to using 4 for the sound tracks, the areas outside the perforations can also be used. In the case of the present example this amounts to 0.096" on each side of the film, which effectively doubles the area available for the soundtracks in each direction. It is envisaged that a plurality of photographic and/or magnetic sound tracks or any other means by which sound may be recorded and/or reproduced will be used so as to have monophonic and/or stereophonic sound and control tracks for the purpose of operating the theater and the equipment in a manner described in U.S.Patent Application No. 06/630.234.

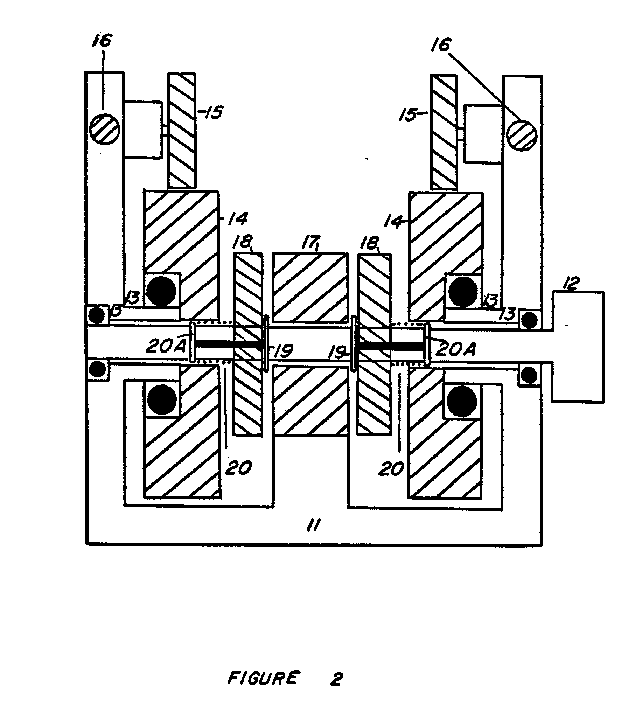

Figure 2 shows schematically the reversible drive mechanism. Although a sound drum is depicted in this figure, the same principle applies to the other reversible drives discussed herein. For the purpose of clarity, only the essential parts that constitute novelty are shown in this figure. 11 is the main mounting bracket. 12 is the sound drum with its integral drive shaft. 13 are the bearings to support the sound drum shaft and the two counter rotating flywheels separately. 14 are the counter rotating flywheels. 15 are the driving motors and pulleys for the flywheels. 16 are the drive motor solenoids. Not shown on this drawing are ways and springs. When the solenoids are energised with electric current, the motors which are held at backstops by pressure springs, will slide down the ways and cause the motor pulleys to be held in physical contact with the flywheels, thereby driving them. When the current is removed from the solenoids, the motors will return to their backstops by spring pressure and the flywheels will be free wheeling. 17 is the drum shaft directional actuating solenoid. 18 are clutch plates. 19 are keyed or splined clutch retainer sleeves, which permit the clutch plates to move laterally. 20 are thrust springs. 20A are spring stops. It will be appreciated that when no current is passing through the main solenoid 17, the drum assembly 12 is free to move with its own mass. When current is passed through the solenoid either one or other of the clutch plates will engage the drum shaft with a flywheel, depending on the polarity of the electric current that is passed through the solenoid. This action will add mass and momentum to the sound drum assembly instantaneously in one direction or the other.

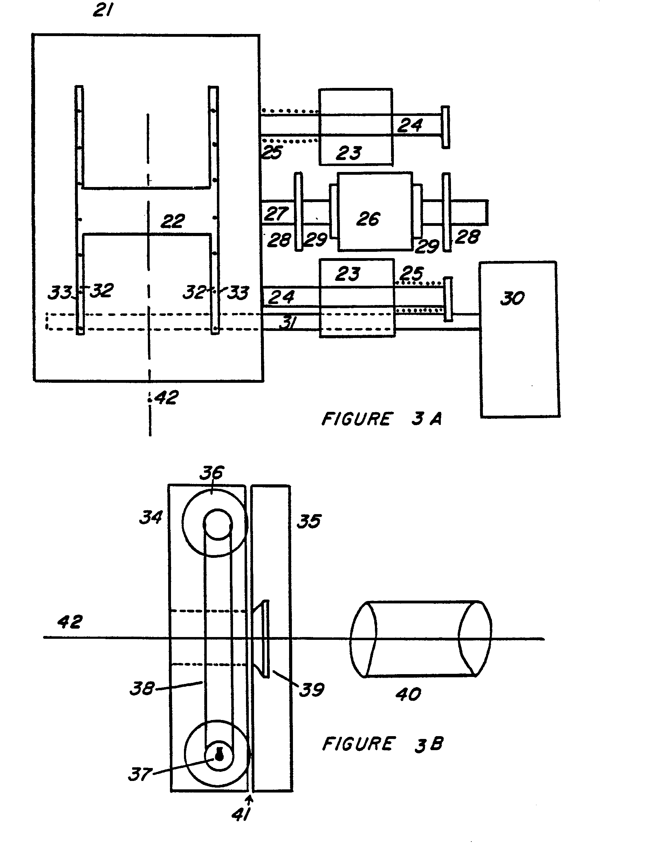

Figure 3 shows the movable gate assembly. 3a shows a front view from the film side of the rear assembly together with the intermittent drive, which in this example is a pair of endless belts and the mechanism to position the required section of the film into the optical center line. 3b shows a side view of the gate assembly which in this example is a pair of synchronously coupled sprockets. 21 is the movable back plate. 22 is the cutout behind the film to let the light through the plate. 23 are precision ways. 24 are precision slides. 25 are centering springs, so that the gate assembly will be in the neutral position naturally. 26 is the bi-directional solenoid. 27 is the gate motion shaft. 28 are the adjustable positioning stops. 29 are the stop striking plates. 30 is the intermittent movement. 31 is the intermittent drive shaft, which is keyed or splined in the gate area, so that the film driving devices will be properly driven in any position of the movable gate assembly. 32 are the sprocket or belt teeth that engage and drive the film through the gate. 33 are cutouts in the back plate to permit the teeth to protrude through and to engage the film. 34 is a side view of the back plate. 35 is the front plate of the gate. This plate is fixed laterally but is movable forward and aft, so as to permit insertion and removal of the film. In its closed (operating) position, pressure plates in this assembly will bear against the film straddling the sprockets or drive pins, so as to maintain the film in intimate contact and properly tensioned at all times. 36 are the drive sprockets. 37 is the keyed intermittent drive shaft.38 is the coupling device to maintain synchronism between the top and bottom sprockets. 39 is the adjustable aperture plate which permits projection of the desired aspect ratio. 40 is the lens assembly. 41 is the film path. 42 is the optical centerline of the projector.

C L A I M S

1. A motion picture film having one or more pairs of parallel side by side tracks so that the film is run in one direction for projecting one track of a pair and in the opposite direction for projecting the other track of a pair, the images in each track being arranged so that they will be correctly displayed top to bottom and left to right and with the correct and intended motion of the moving pictures characterized in that the program material is substantially equally divided between the tracks so that the beginning of the program at one end of the track is laterally adjacent the end of the program at the end of another track.

2. A motion picture film as described in Claim 1 in which the program material is divided into approximately equal halves and is intended to be projected in the downward direction for one half and the upward direction for the other half.

3. A motion picture film as described in Claim 1 in which the program material is divided into two or more pairs of images displaced laterally from each other which will be displayed in the downward direction for half of the images and the upward direction for the other half of the images.

4. A motion picture film as described in Claim 1 configured so as to be complementary to Claims 2 or 3 but which only contains program material in one of the segments.

5. A motion picture film as described in Claims 1, 2, 3 and 4 which bears individual or multiple sound and or data tracks that bear a synchronous relationship to the images on the film.

6. A motion picture film as described in Claims 1 to 5 inclusive that carries recorded data that will configure the exhibition aspect ratio select the correct lens or lens configuration as well as the required direction of the projection apparatus and the appropriate sound system and control the theater's lights and curtains.

7. A motion picture projection apparatus suitable for use with or in combination with film according to any of Claims 1 to 6 characterized by means (14, 15, 16, 17, 18, 19) for reversing its motion instantaneously and means (26, 27, 28, 29) for moving the film laterally in such a manner that the audience will not be aware that there has been any interruption to the continuity of the film.

8. Motion picture projection or sound reading apparatus suitable for use with or in combination with film according to any of Claims 1 to 6 which is capable of reversing the direction of film or sound track motion characterized by a pair of flywheels (14), means (15, 16) for rotating the flywheels in opposite directions and means (17, 18, 19) for selectively coupling the film drive means (12) to one or other of the flywheels (14) to instantaneously reverse the drive motion in such a manner that the audience will be unaware that there has been any interruption to the continuity of the film or sound.

9. A motion picture projection gate (21, 22) and intermittent motion assembly (30, 31, 32) having means (26, 27, 28, 29) arranged to selectively position any lateral image on the film in the optical center (42) of the apparatus upon command.

10. A variable aperture mask (39) characterized by means by which it can be altered automatically to show the correct aspect ratio picture for the film being projected.

11. A motion picture sound reading mechanism characterized by means (14-19) arranged to reverse its motion instantaneously upon command in such a manner that the audience will be unaware that there has been any interruption to the continuity of the film.

12. An integrated microprocessor control system which can be coupled to a computer or device for automating the operation of the projection apparatus and the theater as described in Claim 7 and act upon data described in Claim 6.

0191559

1/3

FIGURE 1

0191559

2/3

FIGURE 2

3/3

21

24
25
23

27
28 29
26
29 28

33 32
32 33
24
31
23
25
30

42

FIGURE 3 A

36
34
35

42

38
39
40

37

41

FIGURE 3 B

European Patent Office

**EUROPEAN SEARCH REPORT**

Application number

EP 86 30 0399

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 147 412 (ALIBERT) <br><br> * Whole document * | 1-3,5, 7,9,10 | G 03 B 21/32 <br> G 03 B 21/50 |
| | --- | | |
| X | FR-A-1 194 241 (DEBRIE) <br><br> * Whole document * | 1-3,5-7 | |
| | --- | | |
| A | FR-A-1 599 800 (TEVERAMA) <br> * Page 3, lines 36-42 * | 7,8,11 | |
| | --- | | |
| A | FR-A-2 345 743 (SIEMENS) <br> * Whole document * | 6,12 | |
| | --- | | |
| A | THE BRITISH KINEMATOGRAPHY SOUND AND TELEVISION SOCIETY JOURNAL, vol. 64, no. 12, December 1982, pages 626-629, London, GB; R. SIMPSON: "The impact of microprocessors on audio visual presentation and production" <br> * Whole document * | 12 | **TECHNICAL FIELDS SEARCHED (Int. Cl.4)** <br><br> G 03 B 21/32 <br> G 03 B 21/50 <br> G 03 B 21/52 <br> G 03 B 31/00 |
| | ----- | | |

The present search report has been drawn up for all claims

| Place of search | Date of completion of the search | Examiner |
|---|---|---|
| THE HAGUE | 23-04-1986 | MEES G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82